# EUROPÄISCHE PATENTSCHRIFT

(11) **EP 3 478 088 B1**
(45) Veröffentlichungstag und Bekanntmachung des Hinweises auf die Patenterteilung: **03.06.2020**
(21) Anmeldenummer: 17804134.9
(22) Anmeldetag: 16.11.2017
(51) Int. Cl.: A23L 13/00, A23L 5/10, B65D 81/34, H05B 3/00, A22C 11/00

(54) **VERFAHREN ZUR BEHANDLUNG EINES LEBENSMITTELS, WELCHES SICH IN EINER ISOLIERENDEN KAPSELUNG ODER UMHÜLLUNG BEFINDET ODER DORT EINGEBRACHT WIRD MITTELS NICHT-KONVENTIONELLER, OHM'SCHER ERHITZUNG**
PROCESS FOR TREATING A FOOD PRODUCT, WHICH IS ENCLOSED OR INTRODUCED IN AN ISOLATING CASING OR ENCLOSURE, BY MEANS OF NON CONVENTIONAL RESISTIVE HEATING
PROCÉDÉ POUR LE TRAITEMENT D'UN PRODUIT ALIMENTAIRE INTRODUIT OU SE TROUVANT DANS UNE ENVELOPPE OU CAPSULE PAR MOYEN DE CHAUFFAGE RÉSISTIVE NON CONVENTIONEL

(30) Priorität: 21.11.2016 DE 102016122395; 15.11.2017 DE 102017126800
(43) Veröffentlichungstag der Anmeldung: 08.05.2019
(73) Patentinhaber: Kortschack, Fritz, 26125 Oldenburg (DE)
(72) Erfinder: KORTSCHACK, Fritz, 26125 Oldenburg (DE); EBERHARDT, Kevin, 91623 Sachsen bei Ansbach (DE)
(74) Vertreter: Kruspig, Volkmar
(86) Internationale Anmeldenummer: PCT/EP2017/079373
(87) Internationale Veröffentlichungsnummer: WO 2018/091557

(56) Entgegenhaltungen:
- EP-A1- 2 175 693
- EP-A1- 2 871 914
- DE-A1- 1 540 909
- US-A- 3 886 290

## Beschreibung

Die Erfindung betrifft ein Verfahren zur Behandlung eines Lebensmittels, welches sich in einer isolierenden Kapselung oder Umhüllung befindet oder dort eingebracht wird mittels nicht-konventioneller, Ohm'scher Erhitzung, zur Erwärmung von in einem Darm befindlicher Wurstware wie Brühwurst, Hot Dogs oder dergleichen Produkten, wobei das jeweilige Lebensmittel mit beabstandeten, elektrisch leitfähigen Elektroden in Verbindung gebracht wird und die Elektroden an einer steuerbaren oder regelbaren Stromquelle angeschlossen sind gemäß Oberbegriff des Anspruches 1.

Aus der DE 1 540 909 A ist eine Vorrichtung zur elektrischen Schnellerhitzung von Lebensmitteln vorbekannt, wobei die Erhitzung durch axialen Durchgang hochfrequenten Wechselstromes erfolgt. Der Wechselstrom wird an den Enden oder Stirnseiten des zu behandelnden langgestreckten Lebensmittels durch Kontakte zugeführt. Die diesbezügliche nicht-leitende oder schlecht leitende Hülle des Lebensmittels wird durchdrungen. Die eingesetzten Elektroden können an den Kontaktflächen spitzen- oder schneidenförmige Vorsprünge besitzen, so dass die vorerwähnte Hülle leichter durchstoßen werden kann.

Bei der Vorrichtung zum Erwärmen von Lebensmitteln nach DE 10 2015 206 385 A1 geht es bevorzugt um die Behandlung von umhüllten Waren, insbesondere Fleisch- und Wurstwaren. Mittels der vorbekannten Lehre soll ein schnelles Erwärmen des umhüllten Lebensmittels durch gleichmäßiges Aufbringen elektrischen Stromes, der innerhalb des Lebensmittels Wärme erzeugt, realisiert werden.

Diesbezüglich weist die Vorrichtung zumindest zwei beabstandete, achsparallele und gleichsinnig drehbare zylindrische Elektroden auf, die mit den Anschlüssen entgegengesetzter Polarität einer elektrischen Stromquelle kontaktiert sind und im elektrischen Kontakt mit der Hülle stehen, wobei die Elektroden an der Hülle rotieren. Die Hülle weist bevorzugt eine Längsachse auf, die parallel zu den Längsachsen der Elektroden angeordnet ist, so dass die zumindest zwei Elektroden achsparallel zur Hülle rotieren.

Die Stromquelle nach DE 10 2015 206 385 A1 stellt Wechselstrom mit einer Frequenz im Bereich von 2 kHz bis 300 MHz bereit.

Die gattungsbildende DE 10 2014 010 166 A1 betrifft ein Verfahren zur Behandlung eines Lebensmittels durch Erhitzung. Dabei kommt eine nichtkonventionelle, Ohm'sche Erhitzung zum Einsatz. Das Funktionsprinzip der Ohm'schen Erhitzung geht auf das direkte Durchleiten von Strom durch das Produkt zurück. Dabei übernimmt das Lebensmittel quasi die Funktion eines Widerstandes.

Bei dem Verfahren nach DE 10 2014 010 166 A1 erfolgt zunächst das Befüllen einer formstabilen oder durch weitere Mittel formstabilisierten Hülle aus nicht-leitendem Material mit einem Füllmaterial. Hierbei kann es sich insbesondere um ein Brät oder einen ähnlichen Lebensmittel-Rohstoff handeln. Im Anschluss werden die Öffnungen der Hülle mit leitenden Flächen, insbesondere mit Platten oder Stopfen, verschlossen. Über die leitenden Flächen erfolgt ein Zuführen des elektrischen Stromes zum Zweck der Ohm'schen Erhitzung.

In einer Ausgestaltung der dortigen Lehre besteht die Möglichkeit, die Strombeaufschlagung des Behandlungsgutes in Intervallen durchzuführen. Demzufolge folgt einem Bestromungsintervall ein Ruheintervall zur Angleichung der Temperatur im Produkt. Die jeweilige Zeitdauer der Intervalle ist wählbar anhand der jeweiligen Produkteigenschaften, zum Beispiel der Wärmeleitfähigkeit bzw. der elektrischen Leitfähigkeit.

In einer Ausgestaltung nach DE 10 2014 010 166 A1 kann das Behandlungsgut innerhalb der Hülle durch leitende Begrenzungen, zum Beispiel Scheiben aus leitendem Material, in Abschnitte unterteilt werden. Diese leitfähigen Begrenzungen führen zu einem Homogenisieren des Stromflusses und damit einer Vergleichmäßigung der Ohm'schen Erwärmung. Ein derart erwärmtes Produkt kann aus der formstabilen Hülle leicht entnommen und in einfacher Weise in Scheiben geschnitten werden.

Rohwurstmasse, die auch im sehr kalten Zustand in entsprechende Kartuschen gefüllt wird, kann durch Verschlüsse und durch Druck dauerhaft weiter verdichtet werden.

Die erwähnte formstabile Hülle kann gleichzeitig als kontaminationsfreie Verpackung, insbesondere Transportverpackung, für das fertige Produkt genutzt werden.

Aus der EP 2 175 693 A1 ist ein Verfahren zur Behandlung von Lebensmitteln vorbekannt, wobei sich das Lebensmittel in einer isolierenden Kapselung oder Umhüllung befindet. Die Behandlung des Lebensmittels erfolgt mittels Ohm'scher Erhitzung. Diesbezüglich wird das Lebensmittel mit beabstandeten, elektrisch leitfähigen Elektroden in Verbindung gebracht. Die Elektroden werden mit einer regelbaren Stromquelle verbunden. Die Elektroden stellen sich als Elektrodengruppen dar, die jeweils eine Anzahl von Einzelelektroden besitzen.

Obwohl die vorbeschriebenen Verfahren bereits sehr gute Ergebnisse bei der Behandlung von Lebensmitteln durch Ohm'sche Erhitzung zeigen, besteht das Problem, dass insbesondere bei großflächigen Kontakten sich während des Erhitzungsvorganges Lufteinschlüsse aufbauen bzw. beim Erhitzen Gase freigesetzt werden, die eine Isolationsschicht unmittelbar vor der Kontaktfläche bilden, so dass die Erwärmung ungleichmäßig erfolgt, wobei es hierdurch zu Störungen im Produktionsablauf bei der Herstellung entsprechender Lebensmittel kommen kann. Dieser Effekt lässt sich zwar mit dem Gedanken des Erzeugens einer Relativbewegung zwischen dem Füllmaterial, das heißt dem zu behandelnden Lebensmittel und den leitenden Flächen, reduzieren, jedoch ist der Aufwand zum Erzeugen einer derartigen Relativbewegung erheblich.

Aus dem Vorgenannten ist es daher Aufgabe der Erfindung, ein weiterentwickeltes Verfahren zur Behandlung eines Lebensmittels, welches sich in einer isolierenden Kapselung oder Umhüllung befindet oder dort eingebracht wird, mittels Ohm'scher Erhitzung anzugeben, dass die geschilderten Nachteile des Standes der Technik nicht mehr aufweist und für eine industrielle Produktion geeignet ist.

Die Lösung der Aufgabe der Erfindung erfolgt mit einem Verfahren gemäß der Lehre nach Patentanspruch 1, wobei die Unteransprüche mindestens zweckmäßige Ausgestaltungen und Weiterbildungen umfassen.

Das erfindungsgemäße Verfahren geht von einer an sich bekannten Ohm'schen Erhitzung aus und bezieht sich auf Lebensmittel, die sich in einer isolierenden Kapselung oder Umhüllung befinden. Bei der Umhüllung kann es sich zum Beispiel um einen Darm handeln. Die isolierende Kapselung kann einzelne Formschalen, Formschalengruppen, zylindrische Hüllen oder andere Hüllenkonfigurationen mit beliebigem Querschnitt umfassen.

Bei den zu behandelnden Lebensmitteln handelt es sich insbesondere um Wurstware wie Brühwurst, Hot Dogs oder dergleichen Produkte. Grundsätzlich sind aber auch andere Lebensmittel wie zum Beispiel gelegter Bauch, Kochschicken, Kasseler, Fleischzubereitungen oder ähnliches mit Hilfe des erfindungsgemäßen Verfahrens behandelbar.

Für das jeweilige Verfahren sind die Elektroden jeweils als mindestens eine erste und eine zweite Elektrodengruppe ausgebildet.

Die Elektrodengruppen weisen einen Abstand A_{EG} zueinander auf.

Jede Elektrodengruppe besitzt wiederum eine Anzahl von Einzelelektroden ähnlich einem Nadelkamm, wobei die benachbarten Einzelelektroden des Nadelkamms jeweils einen Abstand A_{EE} aufweisen.

Der Abstand A_{EG} ist dabei größer oder maximal gleich dem Abstand A_{EE}.

Der jeweilige Nadelkamm durchdringt die isolierende Kapselung oder Umhüllung und durchstößt das Lebensmittel derart, dass sich bezogen auf das Lebensmittel und die Kapselung oder Umhüllung Nadelkammein-, Andock- oder -austrittsstellen ergeben.

Die Einzelelektroden des Nadelkamms bzw. der Nadelkammelektrode sind im Wesentlichen parallel zueinander liegend ausgeführt. Jede Einzelelektrode weist eine Einstichzuspitzung auf. Dies kann zum Beispiel ein entsprechender Anschliff sein. Es ist jedoch auch möglich, Elektroden mit abgerundeten oder abgeflachten Enden mittels eines Platzhalters z. B. angeschliffenes Röhrchen, in die Hülle und durch das Behandlungsgut bis zur gegenüberliegenden Hüllenwand einzubringen, wobei sichergestellt sein muss, dass die Enden der Elektroden plan abschließend auf der gegenüberliegenden Innenwand der Hülle anliegen.
Die Stromquelle wird erfindungsgemäß erst dann aktiviert, wenn alle oder die überwiegende Anzahl der Einzelelektroden ihre (Austrittsstellen-) Endposition erreicht haben, das heißt das Lebensmittel vollständig durchstochen wurde.

Bei einer in einem flexiblen Darm befindlichen Wurstware werden die jeweiligen Elektrodengruppen bevorzugt im Zipfelbereich des Darmes eingestochen und es wird dort ein entsprechender Durchstich erzeugt, wobei mittels Ausübung einer Presskraft in Längsrichtung der Wurstware eine mindestens endseitige Verdichtung der Wurstware eintritt und eine unerwünschte Kappenbildung an den Darmenden vermieden wird.

Nach dem Entfernen der jeweiligen Elektrodengruppe aus dem behandelten Lebensmittel durch Zug- oder Druckkrafteinwirkung werden die verbleibenden Ein- und Durchtrittsstellen am Darm bzw. der Umhüllung verschlossen.

Dieses Verschließen kann zum Beispiel durch Besprühen mit einem lebensmittelverträglichen Flüssigkunststoff, durch Verkleben, Bestreichen oder durch das Aufbringen einer überzugsartigen Umhüllung erfolgen. Zum Zweck des Verschließens sind rückstreckende, selbstheilende Folienmaterialien besonders geeignet. Hierbei kann bereits das Material des Kunstdarmes aus einem derartigen selbstheilenden Folienmaterial bestehen oder in den Bereichen, in welchen die Durchstoßung stattfinden soll, selbstheilende Eigenschaften besitzen.

Die eingangs erwähnte Stromquelle zur Erzeugung elektrischer Energie stellt hochfrequente Energie bereit. Durch die Steuerbarkeit der Energiequelle ist sichergestellt, dass während der Ohm'schen Erhitzung keine unerwünschten Hot-Spots im Lebensmittel entstehen, wobei auch eine impulsartige Strombeaufschlagung mit Kontrolle des Einhaltens einer maximalen Stromstärke möglich ist.

Nach der Ohm'scher Erhitzung besteht zum Zweck der weiteren Dekontamination die Möglichkeit, das entsprechende Produkt in konventioneller Weise nachzuerhitzen, zum Beispiel kann hier ein Wasserbad vorgenommen werden oder eine Behandlung mit Heißdampf erfolgen. Ebenso kann ergänzend eine Behandlung mittels infraroter Strahlung vorgenommen werden.

Bei einer Weiterbildung der Erfindung sind die Einzelelektroden um ihre Achse drehbar bzw. beweglich ausgeführt. Während des Durchstoßens können die Einzelelektroden eine Rotationsbewegung ausführen, wobei während des Entfernens der Einzelelektroden eine diesbezüglich richtungsgeänderte Rotationsbewegung stattfindet. Durch dieses Durchstoßen mittels Rotationsbewegung wird die Einstich- bzw. Durchstichstelle bezogen auf die Umhüllung minimal invasiv ausgeführt, so dass der Aufwand beim Wiederverschließen reduziert ist.

In Weiterbildung der Erfindung können die Einzelelektroden als Hohlelektroden realisiert werden. Der Elektrodenhohlraum kann dann der Aufnahme eines Wärmemittels oder Kühlmittels dienen oder einen Erhitzungskern bzw. Kühlkern hoher thermischer Leitfähigkeit besitzen. Mindestens eine der Elektroden kann einen integrierten Temperatursensor aufweisen.

Die isolierte Kapselung kann starr ausgeführt werden. In diesem Falle weist die Kapselung in ihren Längsendbereichen Öffnungen auf, durch welche die Einzelelektroden eindringen und in Kontakt mit dem Behandlungsgut Lebensmittel gelangen können.

Es sei an dieser Stelle angemerkt, dass das Einbringen der Elektroden bezogen auf ein langgestrecktes Behandlungsgut, zum Beispiel einem Hot Dog, im Wesentlichen schräg bis senkrecht zur Längsachse des Behandlungsgutes erfolgt.

In Weiterbildung der Erfindung können die Einzelelektroden derart eingebracht werden, dass sich mindestens bei einer Elektrodengruppe eine sogenannte Gitterelektrode bildet. Dies bedeutet, dass ein erster Elektrodenkamm in das Lebensmittel nebst Umhüllung eingestochen wird. Ein zweiter Elektrodenkamm wird dann an derselben Stelle, jedoch winkelversetzt, ebenfalls eingestochen. Wird dann in einer gedachten Blickrichtung senkrecht zur Einstichrichtung das entstandene Gebilde analysiert, stellt sich dieses als Gitterelektrode dar.

Die isolierende Kapselung kann in einer Weiterbildung der Erfindung aus (Halb-) Schalen bestehen, welche das Lebensmittel aufnehmen, wobei die (Halb-) Schalen vor dem Eindringen der Elektroden bezogen auf das Lebensmittel formgebend aufeinander zubewegt werden. Durch dieses Aufeinanderzubewegen ist das Lebensmittel form- und verdichtbar. Es ist nicht erforderlich, dass das Lebensmittel in einer Umhüllung den Schalen zugeführt wird, sondern auch als Masse kann das Gut in den Schalen geformt und verdichtet werden, bevor die Erwärmung mittels der Ohm'schen Erhitzung über die (Durch-) Stichelektroden erfolgt. Eventuelle Lufteinschlüsse können entfernt werden, wozu insbesondere die an den gegenüberliegenden Enden der Halbschalen befindlichen Öffnungen zum Durchstechen nutzbar sind.

In Ausgestaltung der Erfindung besteht die Möglichkeit, das Durchdringen oder Durchstoßen des Lebensmittels bzw. der Umhüllung des Lebensmittels ultraschallunterstützt vorzunehmen.

Eine Weiterbildung der erfindungsgemäßen Lehre besteht in dem Gedanken, auf eine kontinuierliche bzw. Linienfertigung abzustellen. Diesbezüglich kann am Ende der erwähnten formstabilen Hülle, die kartuschenartig ist, eine mechanische Trennvorrichtung ähnlich eines Messers angebracht werden, welche einen Volumenstrang des Behandlungsgutes durchtrennt.

Eine derartige Trennvorrichtung, die aus einem leitfähigen Material besteht oder eine leitfähige Beschichtung aufweist, dient dann gleichzeitig als Kontakt und räumliche Begrenzung für das jeweils noch nicht wärmebehandelte Behandlungsgut.

Das Behandlungsgut selbst wird als Endlosstrom über eine Füllvorrichtung in die formstabile Hülle eingebracht. Sobald das noch nicht durch die Erhitzung gemäß dem erläuterten Verfahren erwärmte Behandlungsgut diejenige Stelle erreicht hat, an der die Trennvorrichtung das wärmebehandelte Gut von dem unbehandelten Gut trennt, respektive abschneiden soll, fährt die Trennvorrichtung herunter, das heißt bewegt sich in Richtung Behandlungsgut, wobei die Öffnung der formstabilen Hülle ganzflächig von der Trennvorrichtung, die eine Kontaktfläche darstellt, abgedeckt ist.

Der durch die Fülleinrichtung aufgebrachte Förderdruck wird hierbei bevorzugt aufrechterhalten.

Ein Gegenkontakt in Form des erfindungsgemäßen Nadelkamms sticht vor oder durch die Eingangsöffnung in die Hülle und damit in das Behandlungsgut hinein und durch dieses hindurch. Die nachfolgende Ohm'sche Erhitzung bewirkt, dass zwischen der geschlossenen stromführenden Trennvorrichtung und dem Nadelkamm die notwendige Erhitzung erfolgt. Der anstehende Förderdruck verhindert, dass sich das Behandlungsgut während der Erwärmung zu stark ausdehnt und damit die Konsistenz des Endproduktes negativ beeinträchtigt wird.

Nach der ausgeführten Behandlung wird die Trennvorrichtung und der Nadelkamm von der Öffnung der formstabilen Hülle entfernt und das wärmebehandelte Gut soweit hinausgefördert, dass die Durchstichsöffnungen unmittelbar unter dem Bereich der Schneiden der Trennvorrichtung positioniert sind. Wenn diese Position erreicht ist, wird der Fülldruck kurz unterbrochen, bis die Öffnung durch die Trennvorrichtung wieder verschlossen ist. Parallel oder im Anschluss wird der Nadelkamm durch das Behandlungsgut geführt und der Fülldruck zum Erreichen der geforderten Konsistenz auf das Behandlungsgut aktiviert. Das erhitzte Behandlungsgut kann danach in eine Form gelegt oder mit einer Schutzhülle versehen und gegebenenfalls weiteren Behandlungen, zum Beispiel einer Behandlung mit Flüssigrauch oder Geschmacksstoffen unterzogen werden.

Nach einem weiteren Erfindungsgedanken besteht die Möglichkeit, ein partielles Erwärmen des Behandlungsgutes vorzunehmen.

Unter Rückgriff auf die Einstichelektroden, insbesondere in Nadelkammform, lassen sich Teile eines größeren Behandlungsgutes gezielt erwärmen.

Wenn zum Beispiel nur das Mittelstück eines Kotelettstranges zu erwärmen ist, können Durchstichelektroden nach dem Nackenbereich und weitere vor dem Filetstück positioniert werden.

Bei einer derartigen Lösung ist selbige auch so realisierbar, dass eine fixe Kontaktfläche vorgesehen ist und damit ein Gut beliebiger Länge mit einer entsprechenden Stirnseite mit diesem Kontakt in Verbindung gebracht wird. Wird beabstandet zur stirnseitigen Kontaktierung die Durchstichelektrode in das Behandlungsgut eingeführt und die Stromquelle aktiviert, erfolgt nur eine Erwärmung des Teiles des Gutes, welcher sich zwischen den Elektroden befindet.

Auf die vorstehend kurz erläuterte Art und Weise ist es möglich, zum Beispiel frische Fleischstücke teilzuerwärmen. Die gewählten Temperaturen können dabei von sehr mild, zum Beispiel 40° bis im Bereich höherer Temperaturen, zum Beispiel >100°, eingestellt werden. Dabei hat es sich als besonders vorteilhaft gezeigt, dass eine Inaktivierung von Mikroorganismen im Rahmen einer Ohm'schen Erwärmung bereits bei geringeren Behandlungstemperaturen im Vergleich zu konventioneller Erwärmung eintritt.

Bei einem Behandlungsgut, das eine sehr ungleichmäßige Form aufweist, zum Beispiel geschälte Zungen, kann das Behandlungsgut in ein flüssiges oder gallertartiges Medium verbracht werden, wobei dieses Medium einen einstellbaren elektrischen Widerstand besitzt. Bevorzugt wird der Widerstand des Mediums auf den Widerstandswert des eigentlichen Behandlungsgutes eingestellt. Das so vorbereitete Behandlungsgut kann dann wiederum in formgebende Hüllen verbracht und der gewünschten Ohm'schen Erhitzung ausgesetzt werden.

Ungeachtet der verfahrensgemäßen Vorteile können Inhomogenitäten bei der Erhitzung des Behandlungsgutes zur Bildung von lokalen hohen bzw. lokalen niedrigen Temperaturen (Hot Spots, Cold Spots) führen. Beim Ohm'schen Erhitzen kommt es aufgrund unterschiedlicher elektrischer Leitfähigkeiten einzelner Produktabschnitte bzw. aufgrund einer ungleichmäßigen Verteilung des elektrischen Feldes zu Inhomogenitäten mit den vorerwähnten Hot Spots oder Cold Spots. Besonders disperse Systeme mit wässrigen oder ölhaltigen oder partikulären Fraktionen weisen Unterschiede in der Leitfähigkeit auf, die zu Unterschieden in der Temperaturerhöhung der jeweiligen Phase führen.

Um diesen Problemen zu begegnen, wird erfindungsgemäß vorgeschlagen, den Vorgang des Erhitzens in Abschnitte oder zeitliche Blöcke aufzuteilen, damit sich möglicherweise gebildete Cold Spots oder Hot Spots angleichen können. So ist es möglich, eine Impulserwärmung auf beispielsweise bis zu 50°C des Behandlungsgutes vorzunehmen. Danach wird eine Unterbrechung der Bestromung vorgenommen, so dass das Eiweißnetz festere Strukturen bilden kann. Im nächsten Schritt erfolgt eine Erwärmung auf ca. 60°C. Im Rahmen einer erneuten Behandlungspause erlangt das Eiweißnetz eine höhere Stabilität. Im Anschluss erfolgt dann eine weitere Wärmebehandlung bis auf die gewünschte Endtemperatur. Durch das Durchlöchern bzw. Zerstören von Zellmembranen beim Ohm'schen Erhitzen ergibt sich eine Verbindung intrazellulärer Flüssigkeit mit extrazellulären Flüssigkeiten. Hieraus ergibt sich eine höhere Wasserbindefähigkeit mit der Folge eines geringeren Geleeabsatzes. Hierdurch wiederum reduziert sich die Überlebensrate von Mikroorganismen aufgrund der Schädigung der Zellmembranen, was vorteilhaft für die Haltbarkeit des so behandelten Lebensmittels ist.

Ein weiterer Vorteil der Unterbrechung der Erwärmung bei einer relativ geringen Temperatur wie vorstehend erläutert ist der Umstand, dass das im Behandlungsgut, zum Beispiel einem Brät, vorhandene Gas, vor allem unter einem Gegendruck, sich bei ca. 50°C noch nicht so stark ausdehnt, dass die sich langsam verfestigende Eiweißmatrix zerrissen wird. Während der Behandlungspausen kann sich wie bereits dargelegt, das Eiweißnetz, begünstigt durch die erreichte Temperatur, weiter verfestigen, das heißt koagulieren. Während der sich anschließenden weiteren Temperaturbehandlung wird eingeschlossenes Gas in seiner ursprünglichen Position fixiert gehalten. Bei einer zu schnellen Erwärmung hingegen kann das eingeschlossene Gas explosionsartig expandieren und/oder sich mit anderen Gasen verbinden, bevor sich die Eiweißmatrix ausreichend stark verfestigt hat. Hierdurch entstehen größere Lufteinschlüsse mit entsprechenden Nachteilen auf das Behandlungsgut.

Auch wird der Trocknungsgrad im Bereich von Randzonen des Behandlungsgutes durch die stufenweise Behandlung reduziert.

Ein weiterer Aspekt der Erfindung besteht darin, dass im Falle der Ummantelung eines Produktes, zum Beispiel mittels eines Naturdarmes oder einer wasser- und stromdurchlässigen Umhüllung, zum Beispiel rohes Brät im Saitling, in eine wasser- und stromdurchlässige Form bzw. Membrane eingebracht wird. In diese Form oder Membrane gelegt, wird selbige von einer widerstandseingestellten Flüssigkeit oder gallertartigen Masse kontaktiert (umspült). Die Flüssigkeit an oder um das umhüllte Brät ist dann im erfindungsgemäßen Sinne durch gegenüberliegende Elektroden erhitzbar.

Hierbei ist es möglich, Halbfertigprodukte zwischen den Kontakten quasi schwimmend für eine Erhitzung zu positionieren oder falls es sich um Halbfertigproduktketten handelt, auch im Widerstandsbad zwischen den Kontakten zur Erhitzung kontinuierlich hindurchzuziehen. Nach dem Erhitzen können die Produktketten, zum Beispiel einzelne Bratwürste, separiert und verpackt werden. Falls ein Räucherprozess zur Fertigstellung, zum Beispiel eines Wiener-Würstchens erforderlich ist, kann der Darm soweit getrocknet werden, dass die Trocknung irreversibel ist und eine spätere Wasseraufnahme nicht mehr erfolgen kann. Der letztgenannte Schritt führt vorteilhaft dazu, dass der Darm nicht zäh erscheint. In weiteren Schritten kann dann zum Beispiel durch Rauchbehandlung oder Flüssigrauch die gewünschte Farb- und Geschmacksgebung erfolgen.

Falls es bei der Behandlung des Gutes zu einem nicht ausreichenden Rückschrumpfen eingesetzter Därme als Umhüllungen kommt, besteht die Möglichkeit, den noch nicht behandelten jedoch befüllten Darm zwischen zwei oder mehreren Halb- bzw. Viertelschalen einzuspannen. Die Enden der Halb- oder Viertelschalen weisen dann Löcher auf, durch welche die Kammelektroden oder Durchstichelektroden einführbar sind. Ein zusätzlicher Stopfen mit entsprechend ausgeführten Ausnehmungen, die in ihrer Endstellung exakt mit den Einstichöffnungen in den Halbschalen übereinstimmen, ist in der Lage, den Druck auf das Behandlungsgut zu erhöhen, um möglicherweise vorhandene Hohlräume zu reduzieren. Nach Beendigung der erfindungsgemäßen Ohm'schen Erhitzung ist dann das Brät soweit verfestigt, dass nach dem Öffnen der Halb- oder Viertelschalen das erhitzte Produkt entnommen und in bekannter Weise nachbehandelbar ist. Hierdurch ist sichergestellt, dass auch sehr preiswerte Kunstdärme zur Umhüllung Verwendung finden können. Wenn Elektroden angewendet werden, die in der Lage sind, einen integrierten Temperatursensor aufzunehmen, kann während des Erhitzungsprozesses die Erwärmung bestimmt, die Kerntemperatur ermittelt und selbige als Regelgröße herangezogen werden.

Ganz grundsätzlich ist die erfindungsgemäße Lösung auch zur Behandlung von Rohbräten in Kartuschen nutzbar, wenn die Möglichkeit des Einbringens der erfindungsgemäßen Elektroden geschaffen ist.

Zum Gestalten von Enden oder Kappen, können vor die Elektroden widerstandseingestellte Flüssigkeiten, gallertartige Massen oder Stoffe (Puffermaterial) mit diesen Eigenschaften positioniert werden. Zwischen dem zu erwärmenden Behandlungsgut und dem widerstandseingestellten Puffermaterial wird eine wasser- und stromdurchlässige Form bzw. Membrane eingebracht, die dafür sorgt, dass die Produktenden die gewünschte Form annehmen. Diese Vorrichtung ermöglicht, dass die Bestromung des Behandlungsgutes auch an Ausbuchtungen gleichmäßig erfolgt und die gewünschten Geometrien realisiert werden.

Das Material für die Elektroden bzw. Elektrodengruppen hat den einschlägigen Vorschriften der Lebensmitteltechnologie zu entsprechen und sollte leicht zu reinigen sein. Zur Vermeidung von Kontaminationen besteht die Möglichkeit, die Elektroden mit einer antibakteriellen Beschichtung zu versehen. Hier kann es sich beispielsweise um eine Beschichtung handeln, welche Silberionen aufweist bzw. Silberionen freisetzt.

Alternativ besteht die Möglichkeit, die Elektroden mindestens teilweise aus einem Kunststoffmaterial zu fertigen, wobei das Kunststoffmaterial eine einstellbare elektrische Leitfähigkeit besitzt. Hierdurch ist die Verteilung des Stromflusses über die gedachte Ebene, welche von den einzelnen Elektroden aufgespannt wird, vorgebbar. Eine Folge hiervon ist, eine gleichmäßige, verbesserte Erwärmung, insbesondere in den Randbereichen eines wurstförmigen Behandlungsgutes.

Die Erfindung soll nachstehend anhand eines Ausführungsbeispiels sowie unter Zuhilfenahme von Figuren näher erläutert werden.

Hierbei zeigen:
- Fig. 1: eine Seitenansicht einer erfindungsgemäßen Vorrichtung zur Aufnahme einer Wurstware, die bereits in einem Darm befindlich ist, in einem ersten Zustand ohne Verdichtung in Längsrichtung der Wurstware;
- Fig. 2: eine Darstellung ähnlich derjenigen nach Fig. 1, jedoch mit bereits ausgeführter Verdichtungsbewegung durch seitliche Platten, die gleichzeitig der Führung der Elektroden dienen, so dass die Bildung unerwünschter Kappen in den Endbereichen der Wurstware vermeidbar ist;
- Fig. 3: eine Darstellung ähnlich derjenigen nach Fig. 2, jedoch nach erfolgter Einstich- und Durchstichbewegung der Elektroden durch die Hülle und durch die zu behandelnde Wurstware selbst;
- Fig. 4: eine perspektivische Ansicht einer Vorrichtung gemäß den Darstellungen nach Fig. 1 - 3 zur gleichzeitigen Behandlung mehrerer in einem Darm befindlicher Wurstwaren, insbesondere bei der Brühwurstbearbeitung;
- Fig. 5: eine Detaildarstellung in Seitenansicht der erfindungsgemäßen Vorrichtung zur Aufnahme einer Wurstware, die bereits in einem Darm befindlich ist, in einem Zustand mit erkennbarer Durchstichelektrode ohne Verdichtung in Längsrichtung der Wurstware; und
- Fig. 6: eine Darstellung ähnlich derjenigen nach Fig. 5, jedoch im Ergebnis der Verdichtung in Längsrichtung.

Die in den Figuren zur Durchführung des Verfahrens beispielhaft gezeigte Vorrichtung besteht aus einem Gestell 1, welches Führungsauflagen 2 besitzt.

Jeweils ein Paar beabstandeter Führungsauflagen 2 nimmt eine in einem Darm befindliche Brühwurst auf.

Ein nicht gezeigter Tragrahmen nimmt gegenüberliegend beabstandete Platten 3 und 4 auf.

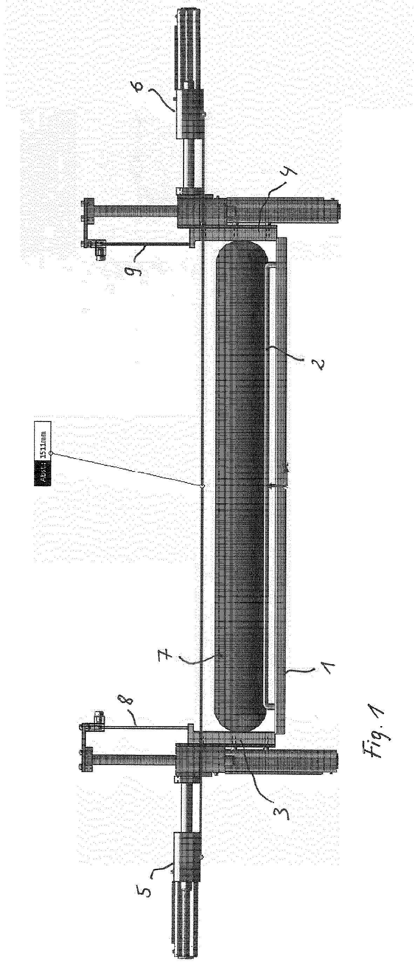

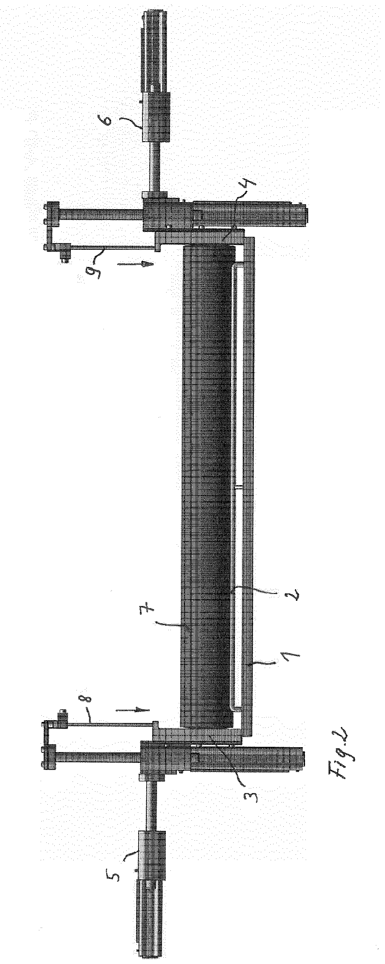

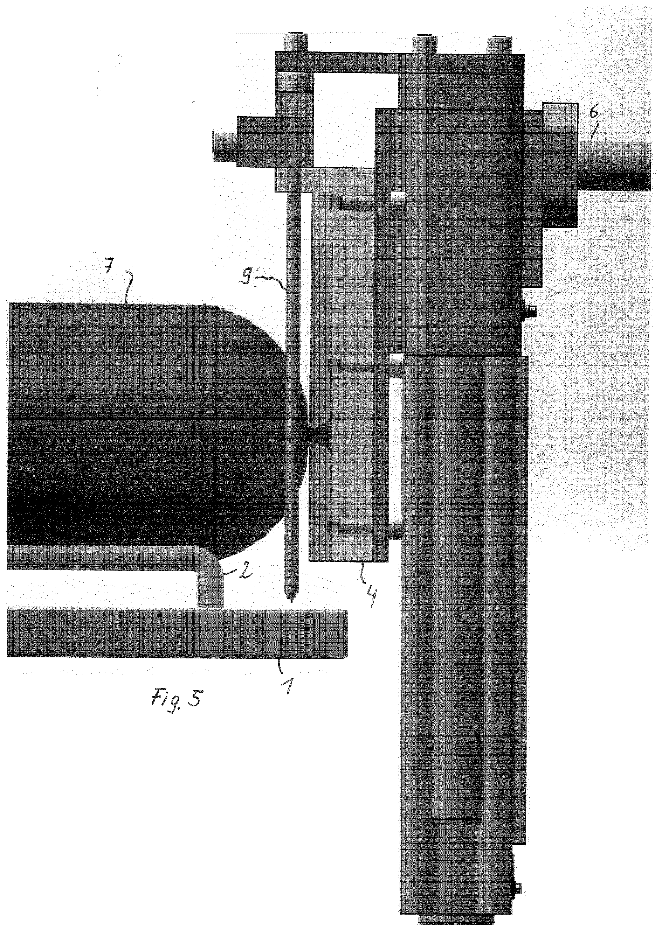

Ein Verfahrmechanismus 5; 6 schafft die Möglichkeit, die Platten 3; 4 aufeinander zu zubewegen, so dass eine Verdichtung der Brühwurst an ihren Enden realisierbar ist, wie dies die Abfolge der Fig. 1 und 2 bzw. 5 und 6 illustriert.

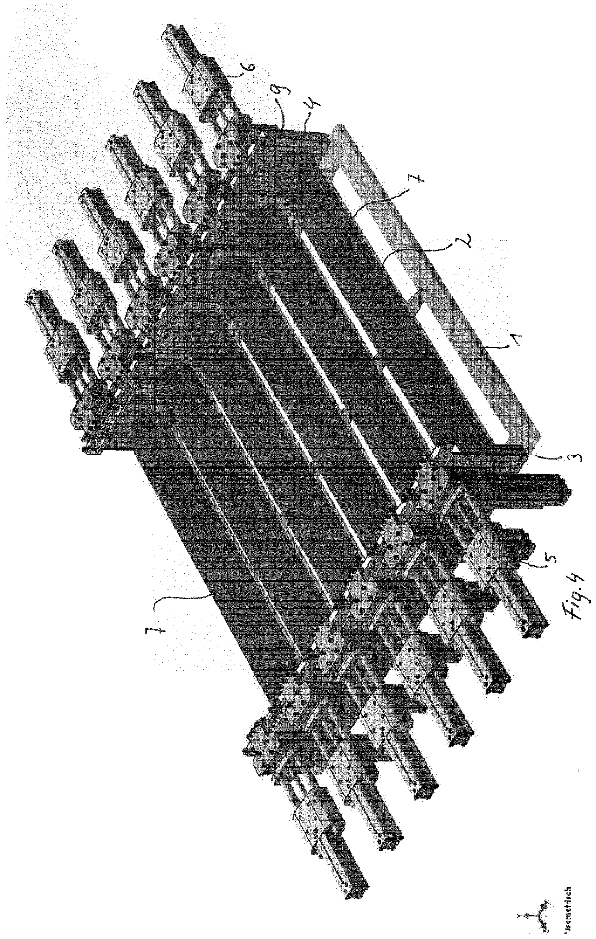

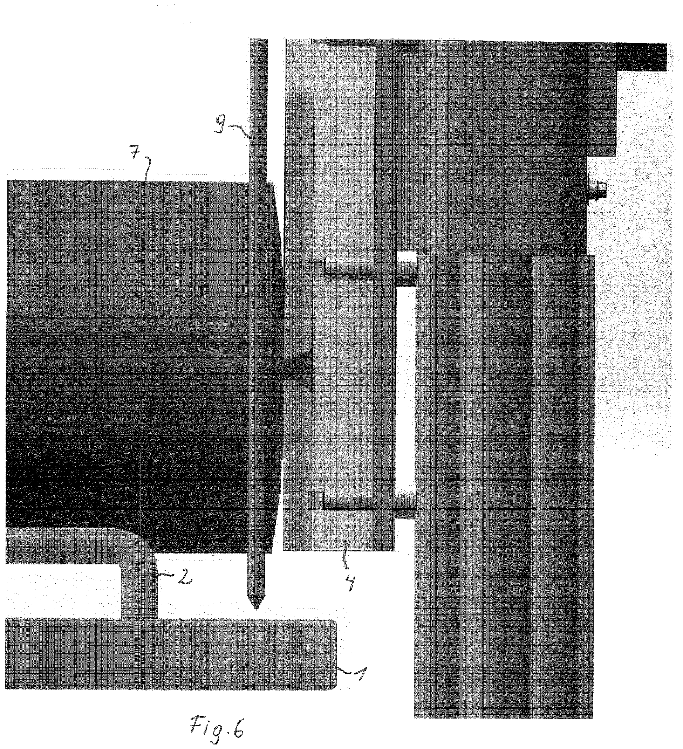

Wenn hier die gewünschte stirnseitige Verdichtung der Brühwurst 7 erreicht wurde, wird die erste 8 und zweite 9 Elektrodengruppe, jeweils umfassend einen Nadelkamm (siehe Fig. 4 und 6) in Pfeilrichtung nach unten bewegt, so dass der gewünschte Vorgang des Durchstechens der Brühwurst 7 erfolgen kann.

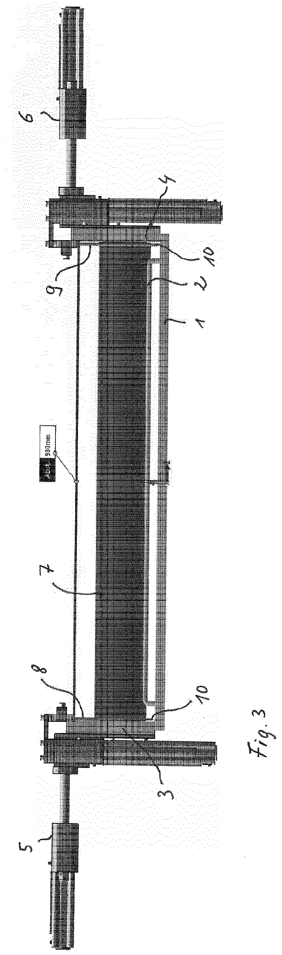

Dieses Durchstechen vollzieht sich wie in der Fig. 3 illustriert derart, dass die Spitzen 10 der Nadelkammelektroden aus den zu behandelnden Lebensmitteln, das heißt der Brühwurst 7, wieder austreten. Es findet also im Vergleich zu Lösungen des Standes der Technik nicht nur ein Einstechen, sondern ein Durchstechen bezogen auf das Produkt 7 statt.

Beim gezeigten Beispiel werden die Nadelelektroden der Elektrodengruppen 8; 9 im Wesentlichen senkrecht zur Längsachse des zu behandelnden Produktes 7 durch dieses hindurchgestochen. Diese Art des Durchstiches hat sich als besonders vorteilhaft gezeigt. Selbstverständlich liegt es im Sinne der Erfindung, von der senkrechten Richtung des Durchstoßens auch abzuweichen.

Der Vorteil der erfindungsgemäß eingesetzten Elektrodengruppen mit Nadelkammelektroden liegt darin, dass im Vergleich zu flächigen Elektroden keine störenden isolierenden Zwischenräume, zum Beispiel durch Gasbildung oder Gasablagerungen, entstehen können. Die Folge ist ein besonders gleichmäßiges und schnelleres Erhitzen des Behandlungsgutes ohne unerwünschte Hot-Spots.

Die Anzahl der Nadelkammelektroden des entsprechenden Nadelkamms kann beispielsweise im Bereich von fünf bis fünfzehn liegen und auf den Durchmesser des Behandlungsgutes angepasst bzw. abgestimmt werden.

## Patentansprüche

1. Verfahren zur Behandlung eines Lebensmittels, welches sich in einer isolierenden Kapselung oder Umhüllung befindet oder dort eingebracht wird mittels nicht-konventioneller, Ohm'scher Erhitzung, zur Erwärmung von in einem Darm befindlicher Wurstware wie Brühwurst, Hot Dogs oder dergleichen Lebensmittelprodukten, wobei das jeweilige Lebensmittel mit beabstandeten, elektrisch leitfähigen Elektroden in Verbindung gebracht wird und die Elektroden an einer steuerbaren oder regelbaren Stromquelle angeschlossen sind, wobei
die Elektroden jeweils als mindestens eine erste (8) und eine zweite (9) Elektrodengruppe ausgebildet sind, wobei die Elektrodengruppen (8; 9) einen Abstand (A_{EG}) zueinander aufweisen,
jede Elektrodengruppe (8; 9) eine Anzahl von Einzelelektroden ähnlich einem Nadelkamm besitzt, wobei die benachbarten Einzelelektroden des Nadelkamms jeweils einen Abstand (A_{EE}) aufweisen,
weiterhin der Abstand zwischen der ersten (8) und der zweiten (9) Elektrodengruppe (A_{EG}) größer oder gleich dem Abstand zwischen benachbarten Einzelelektroden (A_{EE}) ist,
**dadurch gekennzeichnet, dass** der jeweilige Nadelkamm die isolierende Kapselung oder die Umhüllung durchdringend und das Lebensmittel (7) durchstoßend angeordnet oder durchstoßend bewegt wird, derart, dass sich bezogen auf das Lebensmittel (7) und die Kapselung oder Umhüllung Nadelkamm-Ein- und -Austrittsstellen ergeben.

2. Verfahren nach Anspruch 1,
**dadurch gekennzeichnet, dass**
die Einzelelektroden des Nadelkamms im Wesentlichen parallel zueinander liegen und jede Einzelelektrode eine Einstichzuspitzung (10) aufweist, wobei die Stromquelle erst dann aktiviert wird, wenn alle oder die überwiegende Anzahl der Einzelelektroden ihre Austrittsstellenposition erreicht haben.

3. Verfahren nach Anspruch 1 oder 2,
**dadurch gekennzeichnet, dass**
bei einer in einem flexiblen Darm befindlichen Wurstware (7) die jeweilige Elektrodengruppe (8; 9) im Zipfelbereich des Darmes eingestochen und ein Durchstich erzeugt wird, wobei mittels Ausübung einer Presskraft (5; 6) in Längsrichtung der Wurstware (7) eine Druckerzeugung sowie mindestens endseitige Verdichtung eintritt und eine Kappenbildung an den Darmenden reduziert wird.

4. Verfahren nach einem der vorangegangenen Ansprüche,
**dadurch gekennzeichnet, dass**
nach dem Entfernen der jeweiligen Elektrodengruppe (8; 9) aus dem behandelten Lebensmittel (7) durch Zug- oder Druckkrafteinwirkung die verbleibenden Ein- und Durchtrittsstellen verschlossen werden.

5. Verfahren nach Anspruch 4,
**dadurch gekennzeichnet, dass**
das Verschließen durch Besprühen, Verkleben, Bestreichen oder Umhüllen erfolgt.

6. Verfahren nach Anspruch 4,
**dadurch gekennzeichnet, dass**
zum Verschließen rückstreckende, selbstheilende Folienmaterialien eingesetzt werden oder das Darmmaterial selbst mindestens Abschnitte aus einem rückstreckenden, selbstheilenden Material aufweist.

7. Verfahren nach einem der vorangegangenen Ansprüche,
**dadurch gekennzeichnet, dass**
die Stromquelle hochfrequente Energie bereitstellt, wobei die Ohm'sche Erhitzung mindestens bis zum Koagulieren des jeweiligen Lebensmittels ausführbar ist.

8. Verfahren nach einem der vorangegangenen Ansprüche,
**dadurch gekennzeichnet, dass**
eine Nacherhitzung auf konventioneller Basis durchgeführt wird.

9. Verfahren nach einem der vorangegangenen Ansprüche,
**dadurch gekennzeichnet, dass**
die Einzelelektroden um ihre Achse beweglich oder drehbar sind und während des Durchstoßens eine Rotationsbewegung ausführen, wobei während des Entfernens der Einzelelektroden eine diesbezüglich richtungsgeänderte Rotationsbewegung stattfindet.

10. Verfahren nach einem der vorangegangenen Ansprüche,
**dadurch gekennzeichnet, dass**
die Einzelelektroden als Hohlelektroden ausgebildet sind und der Elektrodenhohlraum ein Temperiermittel / Kühlmittel aufnimmt oder führt.

11. Verfahren nach einem der vorangegangenen Ansprüche,
**dadurch gekennzeichnet, dass**
die isolierende Kapselung mindestens teilweise starr ausgeführt ist und Öffnungen aufweist, durch welche die Einzelelektroden eindringen,
im Kontakt mit dem Behandlungsgut Lebensmittel gelangen und dieses durchstechen.

12. Verfahren nach einem der vorangegangenen Ansprüche,
**dadurch gekennzeichnet, dass**
die Einzelelektroden derart eingebracht werden, dass sich mindestens bei einer Elektrodengruppe eine Gitterelektrode bildet.

13. Verfahren nach einem der vorangegangenen Ansprüche,
**dadurch gekennzeichnet, dass**
die isolierende Kapselung aus Halbschalen besteht, welche das Lebensmittel aufnehmen, wobei die Halbschalen vor dem Eindringen der Elektroden bezogen auf das Lebensmittel formgebend aufeinander zubewegt werden.

14. Verfahren nach einem der vorangegangenen Ansprüche,
**dadurch gekennzeichnet, dass**
das Durchdringen oder Durchstoßen ultraschallunterstützt erfolgt.

15. Verfahren nach einem der vorangegangenen Ansprüche,
**dadurch gekennzeichnet, dass**
mindestens in Randbereichen des Behandlungsgutes eine Nachbehandlung mittels konventioneller Hitzebehandlung, insbesondere infraroter Strahlung erfolgt.

16. Verfahren nach einem der vorangegangenen Ansprüche,
**dadurch gekennzeichnet, dass**
die Elektroden so angeordnet sind, dass eine Bestromung und Erwärmung nur in Teilabschnitten des Behandlungsgutes eintritt.

17. Verfahren nach einem der vorangegangenen Ansprüche,
**dadurch gekennzeichnet, dass**
die Bestromung und Erwärmung stufenweise mit zwischengeschalteten Haltezeiten erfolgt.

18. Verfahren nach einem der vorangegangenen Ansprüche,
**dadurch gekennzeichnet, dass**
mindestens eine der Elektroden einen integrierten Temperatursensor aufweist.

19. Verfahren nach einem der vorangegangenen Ansprüche,
**dadurch gekennzeichnet, dass**
die Elektroden aus einem leitfähigen Kunststoffmaterial bestehen.

20. Verfahren nach einem der vorangegangenen Ansprüche,
**dadurch gekennzeichnet, dass**
die Leitfähigkeit der Elektroden einstellbar ist.

21. Verfahren nach Anspruch 20,
**dadurch gekennzeichnet, dass**
die Leitfähigkeit der Elektroden von Elektrode zu Elektrode unterschiedlich einstellbar ist.

22. Verfahren nach einem der vorangegangenen Ansprüche,
**dadurch gekennzeichnet, dass**
ergänzend oder alternativ mindestens eine Elektrodengruppe als gasdurchlässige Kappen- oder Flächenelektrode ausgebildet ist, welche lediglich das Behandlungsgut kontaktierend berührt.

23. Verfahren nach einem der vorangegangenen Ansprüche,
**dadurch gekennzeichnet, dass**
zur Erzielung von gewünschten Geometrien, zwischen dem zu erwärmenden Behandlungsgut und einem widerstandseingestellten Puffermaterial eine wasser- und stromdurchlässige Form bzw. Membrane eingebracht wird.

## Claims

1. A method for treating food which is in an insulating encapsulation or casing or which will be introduced into same, by means of non-conventional ohmic heating, for heating a sausage product such as scalded sausage, hot dogs or similar food products present in a casing, wherein the respective food is brought into contact with spaced electrically conductive electrodes, and the electrodes are connected to a controllable or regulatable current source, wherein
the electrodes are each in the form of at least one first (8) and one second (9) electrode group, wherein the electrode groups (8; 9) are at a distance (A_{EG}) to one another,
each electrode group (8; 9) has a number of individual electrodes, similar to a comb-like set of needles, wherein the neighboring individual electrodes of the comb-like set of needles are each at a distance (A_{EE}) to one another,
furthermore, the distance (A_{EG}) between the first (8) and the second (9) electrode group is greater than or equal to the distance (A_{EE}) between adjacent electrode groups,
**characterized in that** the respective comb-like set of needles is arranged or moved to penetrate the insulating encapsulation or the casing and to pierce the food (7) in such a way that entry and exit points of the comb-like set of needles are formed in relation to the food or the encapsulation or casing.

2. The method according to claim 1,
**characterized in that**
the individual electrodes of the comb-like set of needles are realized to be substantially in parallel to one another, and each individual electrode has a puncture sharpening (10), wherein the current source is only activated when all of or the vast majority of the individual electrodes have reached their exit point end position.

3. The method according to claim 1 or 2,
**characterized in that**
in case of a sausage product (7) present in a flexible natural casing, the respective electrode group (8; 9) is entered in the tail area of the natural casing, and a corresponding puncture is produced, wherein a pressure generation and an at least end-side compaction occurs by means of exerting a pressing force (5; 6) in the longitudinal direction of the sausage product (7), and a cap formation at the natural casing ends is reduced.

4. The method according to any one of the preceding claims,
**characterized in that**
after the removal of the respective electrode groups (8; 9) from the treated foodstuff (7) by the action of tensile or compressive force, the remaining entry or passage points are closed.

5. The method according to claim 4,
**characterized in that**
closing is performed by spraying, gluing, coating or enclosing.

6. The method according to claim 4,
**characterized in that**
re-stretching, self-repairing film materials are used for closing, or the natural casing material itself has at least sections of a re-stretching, self-repairing material.

7. The method according to any one of the preceding claims,
**characterized in that**
the current source provides high-frequency energy, wherein the ohmic heating may at least be performed until the respective foodstuff coagulates.

8. The method according to any one of the preceding claims,
**characterized in that**
reheating is executed on a conventional basis.

9. The method according to any one of the preceding claims,
**characterized in that**
the individual electrodes are movable or rotatable about their axes and execute a rotational movement during the piercing process, wherein a rotational movement in a respectively changed direction takes place during the removal of the individual electrodes.

10. The method according to any one of the preceding claims,
**characterized in that**
the individual electrodes are formed as hollow electrodes, and the hollow electrode space accommodates or conducts a tempering agent / cooling agent.

11. The method according to any one of the preceding claims,
**characterized in that**
the insulating encapsulation is at least in part configured to be rigid and has openings through which the individual electrodes penetrate, get into contact with the material of foodstuff to be treated and pierce it.

12. The method according to any one of the preceding claims,
**characterized in that**
the individual electrodes are introduced such that a grid electrode is formed in at least one electrode group.

13. The method according to any one of the preceding claims,
**characterized in that**
the insulating encapsulation is composed of half shells receiving the foodstuff, wherein the half shells will be moved toward one another to constitute a mold prior to the intrusion of the electrodes with respect to the foodstuff.

14. The method according to any one of the preceding claims,
**characterized in that**
penetrating or piercing is performed in an ultrasonic-assisted manner.

15. The method according to any one of the preceding claims,
**characterized in that**
a post-treatment by means of conventional heat treatment, in particular infrared radiation, is performed at least in edge areas of the material to be treated.

16. The method according to any one of the preceding claims,
**characterized in that**
the electrodes are arranged such that energizing and heating only occurs in partial sections of the material to be treated.

17. The method according to any one of the preceding claims,
**characterized in that**
energizing and heating are performed in a stepwise manner with intermediary stop times.

18. The method according to any one of the preceding claims,
**characterized in that**
at least one of the electrodes has an integrated temperature sensor.

19. The method according to any one of the preceding claims,
**characterized in that**
the electrodes are made of a conductive plastic material.

20. The method according to any one of the preceding claims,
**characterized in that**
the conductivity of the electrodes is adjustable.

21. The method according to claim 20,
**characterized in that**
the conductivity of the electrodes is adjustable to be different from electrode to electrode.

22. The method according to any one of the preceding claims,
**characterized in that**
in addition, or as an alternative, at least one electrode group is formed as a gas-permeable cap electrode or flat electrode which merely touches the material to be treated in a contacting manner.

23. The method according to any one of the preceding claims,
**characterized in that**,
for obtaining desired geometries, a water-permeable and current-permeable mold or membrane is introduced between the material to be treated and heated and a resistance-adjusted buffer material.

## Revendications

1. Procédé de traitement d'un produit alimentaire qui se trouve dans une capsule ou enveloppe isolante ou qui y est introduit, au moyen d'un chauffage résistif non traditionnel, pour chauffer des produits de charcuterie se trouvant dans un boyau, tels que des saucisses cuites, des hot-dogs ou des produits alimentaires similaires, dans lequel le produit alimentaire respectif est mis en contact avec des électrodes espacées, conductrices de l'électricité, et les électrodes sont connectées à une source de courant contrôlable ou réglable,
dans lequel
les électrodes sont chacune réalisées sous la forme d'au moins un premier (8) et un second groupe d'électrodes (9), les groupes d'électrodes (8 ; 9) présentant une distance (A_{EG}) l'un de l'autre,
chaque groupe d'électrodes (8 ; 9) comporte un certain nombre d'électrodes individuelles semblables à un peigne à aiguilles, les électrodes individuelles adjacentes du peigne à aiguilles présentant chacune une distance (A_{EE}),
en outre, la distance (A_{EG}) entre le premier (8) et le second groupe d'électrodes (9) est supérieure ou égale à la distance (A_{EE}) entre les électrodes individuelles adjacentes,
**caractérisé en ce que**
le peigne à aiguilles respectif est disposé ou déplacé de manière à pénétrer dans la capsule ou enveloppe isolante et à transpercer le produit alimentaire (7), de telle sorte que des emplacements d'entrée et de sortie du peigne à aiguilles se forment par rapport au produit alimentaire (7) et à la capsule ou l'enveloppe.

2. Procédé selon la revendication 1,
**caractérisé en ce que**
les électrodes individuelles du peigne à aiguilles sont sensiblement parallèles les unes aux autres et chaque électrode individuelle présente une pointe de poinçonnement (10), la source de courant n'étant activée que lorsque toutes ou la majorité des électrodes individuelles ont atteint la position de leur emplacement de sortie.

3. Procédé selon la revendication 1 ou 2,
**caractérisé en ce que**
dans le cas d'une saucisse (7) située dans un boyau flexible, le groupe d'électrodes correspondant (8 ; 9) est percé dans la zone de la pointe du boyau en réalisant une perforation, et
en exerçant une force de pression (5 ; 6) dans le sens longitudinal de la saucisse (7), une pression est générée et un compactage se produit au moins du côté extrémité et la formation de capuchons aux extrémités du boyau est réduite.

4. Procédé selon l'une des revendications précédentes,
**caractérisé en ce que**
après avoir enlevé le groupe d'électrodes respectif (8 ; 9) hors du produit alimentaire traité (7), les emplacements d'entrée et de percée restants sont refermés par l'application d'une force de traction ou de compression.

5. Procédé selon la revendication 4,
**caractérisé en ce que**
la refermeture est obtenue par pulvérisation, collage, recouvrement ou enveloppement.

6. Procédé selon la revendication 4,
**caractérisé en ce que**
pour la refermeture, des matériaux de feuille rétractables et auto-cicatrisants sont utilisés ou la matière du boyau elle-même comporte au moins des portions d'un matériau rétractable et auto-cicatrisant.

7. Procédé selon l'une des revendications précédentes,
**caractérisé en ce que**
la source de courant fournit de l'énergie à haute fréquence, ce qui permet d'effectuer un chauffage résistif au moins jusqu'à la coagulation du produit alimentaire respectif.

8. Procédé selon l'une des revendications précédentes,
**caractérisé en ce que**
un post-chauffage est effectué à base traditionnelle.

9. Procédé selon l'une des revendications précédentes,
**caractérisé en ce que**
les électrodes individuelles sont mobiles ou rotatives autour de leur axe et effectuent un mouvement de rotation pendant le perçage, et
pendant l'enlèvement des électrodes individuelles, il se produit un mouvement de rotation avec un changement de direction.

10. Procédé selon l'une des revendications précédentes,
**caractérisé en ce que**
les électrodes individuelles sont réalisées sous forme d'électrodes creuses et la cavité des électrodes reçoit ou mène un agent de températion/refroidissement.

11. Procédé selon l'une des revendications précédentes,
**caractérisé en ce que**
la capsule isolante est réalisée au moins partiellement rigide et présente des ouvertures à travers lesquelles pénètrent les électrodes individuelles, viennent en contact avec le produit à traiter qu'est le produit alimentaire, et le percent.

12. Procédé selon l'une des revendications précédentes,
**caractérisé en ce que**
les électrodes individuelles sont introduites de manière à former au moins une électrode en forme de grille pour au moins un groupe d'électrodes.

13. Procédé selon l'une des revendications précédentes,
**caractérisé en ce que**
la capsule isolante est constituée de demi-coques qui reçoivent le produit alimentaire, les demi-coques étant rapprochées l'une de l'autre de manière à mettre en forme le produit alimentaire, avant la pénétration des électrodes.

14. Procédé selon l'une des revendications précédentes,
**caractérisé en ce que**
la pénétration ou la perforation s'effectue en étant assistée par ultrasons.

15. Procédé selon l'une des revendications précédentes,
**caractérisé en ce que**
au moins dans les zones de bord du produit à traiter, un post-traitement s'effectue par traitement thermique traditionnel, en particulier par rayonnement infrarouge.

16. Procédé selon l'une des revendications précédentes,
**caractérisé en ce que**
les électrodes sont disposées de telle sorte qu'une alimentation électrique et un échauffement ne se produisent que dans des portions partielles du produit à traiter.

17. Procédé selon l'une des revendications précédentes,
**caractérisé en ce que**
l'alimentation électrique et l'échauffement s'effectuent par étapes avec interposition de temps d'arrêt.

18. Procédé selon l'une des revendications précédentes,
**caractérisé en ce que**
l'une au moins des électrodes présente un capteur de température intégré.

19. Procédé selon l'une des revendications précédentes,
**caractérisé en ce que**
les électrodes sont constituées en une matière plastique conductrice.

20. Procédé selon l'une des revendications précédentes,
**caractérisé en ce que**
la conductivité des électrodes est réglable.

21. Procédé selon la revendication 20,
**caractérisé en ce que**
la conductivité des électrodes est réglable différemment d'une électrode à l'autre.

22. Procédé selon l'une des revendications précédentes,
**caractérisé en ce que**
en supplément ou en variante, au moins un groupe d'électrodes est réalisé sous forme d'électrode à capuchon ou d'électrode surfacique perméable aux gaz qui ne vient en contact qu'avec le produit à traiter.

23. Procédé selon l'une des revendications précédentes,
**caractérisé en ce que**
pour obtenir des géométries désirées, un moule ou une membrane perméable à l'eau et au courant est introduit(e) entre le produit à traiter à chauffer et un matériau tampon à résistance réglée.
